# EUROPEAN PATENT SPECIFICATION

(11) **EP 3 582 600 B1**
(45) Date of publication and mention of the grant of the patent: **18.11.2026**
(21) Application number: 18707597.3
(22) Date of filing: 15.02.2018
(51) Int. Cl.: A01C 1/00, A01C 21/00, A01G 22/00

(54) **PROCESSES FOR DIRECT SEEDING OF GUAYULE**
VERFAHREN ZUR DIREKTEN GUAYULEN-AUSSAAT
PROCESSUS D'ENSEMENCEMENT DIRECT DE GUAYULE

(30) Priority: 17.02.2017 US 201762460359 P; 15.12.2017 US 201762599185 P
(43) Date of publication of application: 25.12.2019
(73) Proprietor: Bridgestone Corporation, Tokyo 104-8340 (JP)
(72) Inventor: WANG, Guangyao, Chandler, Arizona 85286 (US); DIERIG, David, Phoenix, Arizona 85042 (US)
(74) Representative: Marks & Clerk LLP
(86) International application number: PCT/US2018/018293
(87) International publication number: WO 2018/152280

(56) References cited:
- US-A- 1 735 835
- US-A1- 2016 073 577
- WILLIAM G MCGINNIES ET AL: "Guayule Rubber Production: The World War II Emergency Rubber Project: A Guide to Future Development", 1 January 1980 (1980-01-01), XP055474597, Retrieved from the Internet <URL:https://arizona.openrepository.com/bitstream/handle/10150/244089/oals_10.pdf?sequence=1&isAllowed=y> [retrieved on 20180514]

## Description

### FIELD OF THE DISCLOSURE

The present disclosure relates to processes for the direct seeding of guayule into fields and to fields produced by such processes.

### BACKGROUND

The guayule plant (*Parthenium argentatum*) is a woody shrub which produces rubber within its cells. Guayule plants reproduce from seed. Guayule seeds are small in size with approximately 1400-2000 guayule seeds being contained within one gram of dry seed matter. Guayule is usually established in fields by transplanting of seedlings produced from nurseries or greenhouses. US 1735 835 A and McGinnies W.G. et al., "Guayule Rubber Production: The World War II Emergency Rubber Project: A Guide to Future Development", 1 January 1980, XP055474597 disclose processes for direct seeding of guayule seeds into fields; US 2016/073577 A1 discloses a method of adding a compost bulking agent and seed mixture to soil.

### SUMMARY

Disclosed herein are processes for direct seeding of guayule into fields and fields produced by the processes.

In a first embodiment, a process is provided for direct seeding of guayule seeds into a field. The process comprises: (a) providing treated guayule seeds and a field comprising soil with an exposed surface, (b) mixing the treated guayule seeds with a seed starting mixture to produce a planting mixture comprising 0.1 to 5 kg of the treated guayule seeds per 380 liters (100 gallons) of seed starting mixture, wherein the starting seed mixture comprises a majority by volume of peat, plant fibers, or a combination thereof, (c) applying portions of the planting mixture to the exposed surface of the soil, (d) pressing the portions of the planting mixture, and (e) allowing the guayule seeds of (d) to germinate into seedlings, wherein the treated guayule seeds applied via portions of the planting mixture to the field are non-sprouted.

### DETAILED DESCRIPTION

Disclosed herein are processes for direct seeding of guayule into fields and fields produced by the processes.

In a first embodiment according to the invention defined in claim 1, a process is provided for direct seeding of guayule seeds into a field. The process comprises: (a) providing treated guayule seeds and a field comprising soil with an exposed surface, (b) mixing the treated guayule seeds with a seed starting mixture to produce a planting mixture comprising 0.1 to 5 kg of the treated guayule seeds per 380 liters (100 gallons) of seed starting mixture, wherein the starting seed mixture comprises a majority by volume of peat, plant fibers, or a combination thereof, (c) applying portions of the planting mixture to the exposed surface of the soil, (d) pressing the portions of the planting mixture, and (e) allowing the guayule seeds of (d) to germinate into seedlings, wherein the treated guayule seeds applied via portions of the planting mixture to the field are non-sprouted.

### Definitions

The terminology as set forth herein is for description of the embodiments only and should not be construed as limiting the invention as a whole, as defined by the claims.

As used herein, the term "majority" refers to more than 50% and unless indicated to the contrary encompasses 100%.

As used herein, the term "minority" refers to less than 50% and unless indicated to the contrary encompasses 0%.

As used herein, the term "acre" refers to 4,047 square meters (4,840 square yards (with a yard corresponding to 0.91 meters (3 feet)). One acre corresponds to approximately 0.405 hectares and values presented in acres should be understood to be also disclosed in corresponding hectares.

### Direct Seeding

As discussed above, the process of the first embodiment disclosed herein is directed to direct seeding of guayule seeds into a field. Direct seeding involves placement of seeds directly into the soil of a field in which the seeds germinate and grow into plants. Direct seeding can be contrasted with the placement of seedlings into a field, which seedlings may have been originally grown from seeds planted in a medium located in a greenhouse. According to the first embodiment, a planting mixture comprising treated guayule seeds and seed starting mixture is used in the direct seeding process. More specifically, according to the first embodiment, portions of the planting mixture are applied to the exposed surface of the soil. In other words, the process of the first embodiment comprises applying portions of the planting mixture to the exposed surface of the soil. In certain embodiments of the first embodiment, the portions are applied in spaced intervals to rows; in certain such embodiments, each row (or bed of the row) is spaced about 50 to about 200 cm (about 20 to about 80 inches) apart or 50-200 cm (20-80 inches) apart (e.g., 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, or 80 inches apart), preferably about 76 to about 127 cm (about 30 to about 50 inches) apart or 76-107 cm (30-50 inches) apart, or about 76 to about 107 cm (about 30 to about 42 inches) apart or 76-107 cm (30-42 inches) apart. In certain embodiments of the first embodiment, the portions are applied in spaced intervals to rows; in certain such embodiments, each row (or bed of the row) is spaced about 50 to about 200 centimeters apart or 50-200 centimeters apart (e.g., 50, 55, 60, 65, 70, 75, 80, 85, 90, 95, 100, 110, 120, 130, 140, 150, 160, 170, 180, 190, or 200 centimeters apart), preferably about 75 to about 120 centimeters apart or 75-120 centimeters apart, or about 75 to about 105 centimeters apart or 75-105 centimeters apart. As used herein, spacing between beds or rows refers to spacing from the center of one row or bed to the center of an adjacent row or bed. In those embodiments of the first embodiment wherein the soil to which the portions are applied has been plowed into raised beds, the foregoing row spacing refers to the distances between center points of each bed. In certain embodiments of the first embodiment, portions are applied in rows and portions within a given row are linearly spaced about 1.3 to about 76 cm (about 0.5 to about 36 inches) apart or 1.3 to 76 cm (0.5-36 inches) apart (e.g., 0.5, 1, 2, 4, 6, 8, 10, 12, 14, 16, 18, 20, 22, 24, 26, 28, 30, 32, 34, or 36 inches apart), preferably about 15 to about 61 cm (about 6 to about 24 inches) apart or 15-61 cm (6-24 inches) apart, or about 25 to about 46 cm (about 10 to about 18 inches) apart or 25-46 cm (10-18 inches) apart. In certain embodiments of the first embodiment, portions are applied in rows and portions within a given row are linearly spaced about 1 to about 90 centimeters apart or 1-90 centimeters apart (e.g., 1, 5, 10, 15, 20, 25, 30, 35, 40, 45, 50, 55, 60, 65, 70, 75, 80, 85, or 90 centimeters apart), preferably about 15 to about 60 centimeters apart or 15-60 centimeters apart, or about 25 to about 45 centimeters apart or 25-45 centimeters apart. In order to facilitate placement of the portions into one or more of the foregoing spaced intervals, the soil of the field is preferably plowed into rows having raised beds and furrows (as discussed further *infra*)*.* In certain embodiments of the first embodiment, the portions are placed in a continuous strip to rows (i.e., there are no separate portions with spacing therebetween); in certain such embodiments, the rows are spaced apart as described above.

According to the processes of the first embodiment, the size of the portions of planting mixture that are applied to the soil may vary. Factors such as the concentration of the treated guayule seeds within the planting mixture and the desired spacing interval of the portions may influence the preferred size of the portion of planting mixture. In certain embodiments of the first embodiment wherein the portions are applied in spaced intervals, each portion comprises about 10 to about 50 milliliters, 10-50 milliliters (e.g., 10, 15, 20, 25, 30, 35, 40, 45, or 50 milliliters), about 20 to about 30 milliliters, or 20-30 milliliters of planting mixture. In certain embodiments of the first embodiment, each portion is of equal or substantially equal size (i.e., having volumes that vary by no more than +/- 10%). In certain embodiments of the first embodiment, each portion of plant mixture contains about 5 to about 500 or 5-500 treated guayule seeds (e.g., 5, 10, 15, 20, 25, 30, 35, 40, 45, 50, 75, 100, 125, 150, 175, 200, 225, 250, 275, 300, 325, 350, 375, 400, 425, 450, 475, or 500 treated guayule seeds), preferably about 5 to about 50 or 5-50 treated guayule seeds.

According to the processes of the first embodiment, the rate at which the planting mixture is applied to the soil may vary. In certain embodiments of the first embodiment, the planting mixture is applied at a rate of about 110 liters (30 gallons) to about 760 liters (200 gallons) or 110-760 liters (30-200 gallons) (e.g., 30, 40, 50, 60, 70, 80, 90, 100, 110, 120, 130, 140, 150, 160, 170, 180, 190 or 200 gallons) of planting mixture per acre of field and in other embodiments about 280 liters (75 gallons) to about 380 liters (100 gallons) or 280-380 liters (75-100 gallons) of planting mixture per acre of field. In certain embodiments of the first embodiment, the planting mixture is applied at a rate of about 110 liters to about 750 liters or 110-750 liters (e.g., 110, 120, 130, 140, 150, 160, 170, 180, 190, 200, 250, 300, 350, 400, 450, 500, 550, 600, 650, 700, or 750 liters) of planting mixture per acre of field and in other embodiments about 280 liters to about 380 liters or 280-380 liters of planting mixture per acre of field. In certain embodiments of the first embodiment, the planting mixture is applied at a rate sufficient to spread 0.1-5 kilograms (e.g., 0.1, 0.2, 0.25, 0.3, 0.35, 0.4, 0.45, 0.5, 0.55, 0.6, 0.65, 0.7, 0.75, 0.8, 0.85, 0.9, 0.95, 1, 1.1, 1.2, 1.3, 1.4, 1.5, 1.6, 1.7, 1.8, 1.9, 2, 2.5, 3, 3.5, 4, 4.5, or 5 kilograms) of treated guayule seeds per acre of field, 0.1 to about 2 kilograms or 0.5-2 kilograms of treated guayule seeds per acre of field, preferably 0.1-0.5 kilograms of treated guayule seeds per acre of field, via the planting mixture; in certain embodiments of the first embodiment, the planting mixture is applied at one of the foregoing rates in terms of kilograms of treated guayule seeds per acre of field in combination with on the foregoing rates in terms of gallons of planting mixture per acre of field.

As mentioned above, according to the process of the first embodiment disclosed herein, portions of the planting mixture are applied to the exposed surface of the soil of the field. By stating that the portions are applied to the surface of the soil is meant that the planting mixture is placed upon the surface of the soil rather than the guayule seed itself being planted into or beneath the surface of the soil. In certain embodiments of the first embodiment, the surface of the soil contains one or more depressions onto which the portions are placed; when present such depressions extend no more than 2.5 cm (1 inch) into the soil and generally will have a depth of about 2.5 to about 0.3 cm (about 1 to about 0.125 inches), 2.5-0.3 cm (1-0.125 inches) (e.g., 1 inch, 0.9 inches, 0.8 inches, 0.7 inches, 0.75 inches or ¾ inch, 0.6 inches, 0.5 inches or ½ inch, 0.4 inches, 0.3 inches, 0.2 inches, 0.125 inches or 1/8 inch, or 0.1 inches), about 0.3 to about 1.9 cm (about 0.125 to about 0.75 inches), 0.3-1.9 cm (0.125-0.75 inches), preferably about 0.5 to about 1.3 cm (about 0.2 to about 0.5 inches) or 0.5-1.3 cm (0.2 to 0.5 inches). In certain embodiments of the first embodiment, the surface of the soil contains one or more depressions onto which the portions are placed; when present such depressions extend no more than 2.5 centimeters into the soil and generally will have a depth of about 2.5 to about 0.3 centimeters, 2.5-0.3 centimeters (e.g., 2.5, 2.2, 2, 1.8, 1.5, 1.2, 1, 0.8, 0.5, 0.3, or 0.2 centimeters), about 0.3 to about 2 centimeters, 0.3-2 centimeters, preferably about 0.5 to about 1.2 centimeters. By stating that the surface of the soil is exposed is meant that bare soil is available for the portions to be placed upon or applied to. In certain embodiments of the first embodiment, the field soil onto which the portions are applied has been prepared for planting by one or more of plowing, discing, leveling, listing, or bed-shaping. In certain embodiments of the first embodiment, the prepared soil comprises rows of furrows and beds (with the furrows separating the beds) and the portions of the plant mixture are applied to the beds. In certain embodiments of the first embodiment, the beds are raised beds which have a surface height about 5 to about 20 cm (about 2 to about 8 inches) above, 5-20 cm (2-8 inches) above, about 10 to about 15 cm (about 4 to about 6 inches) above, or 10-15 cm (4-6 inches) above the depth of the furrows between the rows; in certain such embodiments each raised bed is about 25 to about 150 cm (about 10 to about 60 inches) wide, or 25-150 cm (10-60 inches) wide (e.g., 10 inches, 20 inches, 24 inches, 25 inches, 30 inches, 35 inches, 36 inches, 40 inches, 45 inches, 48 inches, 50 inches, 55 inches, or 60 inches). In certain embodiments of the first embodiment, the beds are raised beds which have a surface height about 5 to about 20 centimeters above, 5-20 centimeters above, about 10 to about 15 centimeters above, or 10-15 centimeters above the depth of the furrows between the rows; in certain such embodiments each raised bed is about 25 to about 150 centimeters wide or 25-150 centimeters wide (e.g., 25, 30, 35, 40, 50, 55, 60, 65, 70, 75, 80, 85, 90, 95, 100, 110, 120, 130, 140, or 150 centimeters wide). Generally, the bed or raised bed will have a flat surface rather than a peaked or triangular surface.

According to the first embodiment, the day or days of the year when the portions of the planting mixture are applied to the soil may vary. In certain embodiments of the first embodiment, the portions of the planting mixture are applied on a day or days when the mean daily air temperature ranges from 50 to 90 °F (e.g., 50, 55, 60, 65, 70, 75, 80, 85, or 90 °F or 10 to 32 °C (e.g., 10, 12, 14, 16, 18, 20, 22, 24, 26, 28, 30, or 32 °C). Planting during a period of time when the mean daily air temperature is between the foregoing ranges will be more favorable to germination of the guayule seeds than planting when the mean daily air temperature is lower or higher.

### Treated Guayule Seeds

As mentioned above, the guayule seeds which are applied to the soil of the field according to the process of the first embodiment are treated guayule seeds. By treated guayule seeds is meant that the seeds have been exposed to a seed germination treatment. The particular type or types of seed germination treatment used to treat the guayule seeds may vary. Generally, the seed germination treatment will comprise a treatment which breaks dormancy and increases germination (speed of germination, success rate of germination, or both) of the seed. In certain embodiments of the first embodiment, the seed germination treatment comprises a chemical treatment. Various seed germination treatments are known to those of skill in the art and can be applied to guayule seeds. In certain embodiments of the first embodiment, the seed germination treatment comprises application of and/or soaking of guayule seeds with at least one of the following: (a) water, (b) plant growth regulator such as gibberellic acid (e.g., GA3, GA7, GA4); (c) potassium nitrate (i.e., KNO₃); (d) bleach solution (e.g., water solution of sodium hypochlorite (NaClO), calcium hypochlorite (Ca(ClO)₂, or a combination thereof at a concentration of 2-10% or 4-8%). Generally, when one or more of the foregoing is utilized as a seed germination treatment, liquid application is used (e.g., by dissolving the compound(s) in water or another liquid solvent).

In those embodiments of the first embodiment wherein the seed germination treatment comprises use of a plant growth regulator such as discussed above, the concentration of the plant growth regulator in any liquid application may vary and the time of contact between the liquid and the guayule seeds may vary. In certain embodiments of the first embodiment, the concentration of plant growth regulator is about 0.1 mmoles/liter to about 1 mmoles/liter or 0.1-1 mmoles/liter (e.g., 0.1, 0.2, 0.3, 0.4, 0.5, 0.6, 0.7, 0.8, 0.9, 1 mmoles/liter), preferably about 0.4 mmoles/liter to about 0.8 mmoles/liter or 0.4-0.8 mmoles/liter; in certain embodiments of the foregoing, the liquid solvent utilized is water and the foregoing refers to the amount of plant growth regulator used per liter of water. In certain embodiments of the first embodiment, gibberellic acid is dissolved in alcohol (e.g., isopropanol) prior to mixing with water. In certain embodiments of the first embodiment, the plant growth regulator is used at one of the foregoing concentrations and the guayule seeds are allowed to soak for about 0.5 to about 6 hours, or 0.5-6 hours (e.g., 0.5, 1, 1.5, 2, 2.5, 3, 3.5, 4, 4.5, 5, 5.5, or 6 hours), preferably 1 to about 3 hours or 1-3 hours; in certain such embodiments soaking is followed by draining and drying. According to the first embodiment, the particular method used for drying may vary. Exemplary methods of drying include drying at room temperature, drying in a seed dryer, and drying at outside ambient temperature (optionally in the sun); preferably, any drying method employed will utilize a temperature of no more than about 95 °F (no more than 35 °C). In certain embodiments of the first embodiment, gibberellic acid (e.g., GA3) is used at one of the foregoing concentrations and/or for one of the foregoing times.

In certain embodiments of the first embodiment, the treated guayule seeds further comprise (include) an insecticide treatment. In certain such embodiments, the insecticide treatment is applied to the guayule seeds as a coating. In certain embodiments of the first embodiment, insecticide is applied to the guayule seeds after the seed germination treatment. Various insecticides may be utilized according to the process of the first embodiment, including, but not limited to clothianidin, acetamiprid, nitenpyram, nithiazine, and thiacloprid. One or more than one of the foregoing insecticides may be utilized, or one or more of the foregoing insecticides may be utilized in combination with another insecticide. In those embodiments of the first embodiment wherein an insecticide is utilized or present on the treated guayule seeds, the rate at which the insecticide is used may vary. In certain embodiments of the first embodiment, the insecticide is used at an active ingredient rate of 20 grams to 150 grams (e.g., 20, 25, 30, 35, 40, 45, 50, 55, 60, 65, 70, 75, 80, 85, 90, 95, 100, 105, 110, 115, 120, 125, 130, 135, 140, 145, or 150 grams) per 150 grams of seed, preferably 25 to 100 grams or 30 to 90 grams per 150 grams of seed. In certain embodiments of the first embodiment, the insecticide is used at an active ingredient rate in according with its registration label. When measuring or determining a rate of insecticide treatment, the guayule seed has preferably been dried to a moisture content of no more than about 10% by weight (e.g., 10%, 9%, 8%, 7%, 6%, 5%, 4%, 3%, 2%, or 1%) so that excess water is not included in the seed weight. Various drying methods may be utilized such as drying at room temperature, drying in a seed dryer, and drying at outside ambient temperature (optionally in the sun); preferably, any drying method employed will utilize a temperature of no more than about 95 °F (no more than 35 °C).

According to the process of the first embodiment, there is no need for the treated guayule seeds to be allowed to sprout or start to sprout prior to applying them via the portions to the soil of the field. Accordingly, in the first embodiment, the treated guayule seeds that are applied via the portions of planting mixture to the field can be considered non-sprouted.

In certain embodiments of the process of the first embodiment, the guayule seeds which are treated have been cleaned to increase the density of viable seed in a given quantity. Such cleaning may generally include removal of non-seed plant matter (e.g., flowers and leaves) and/or removal of less dense seed. In certain embodiments of the process of the first embodiment, the guayule seeds which are treated have a density which is quantified by a measurement referred to as 100 seed weight. This measurement refers to the weight (in grams) of 100 seeds. In certain embodiments of the process of the first embodiment, the guayule seeds which are treated have a 100 seed weight of at least 0.04 grams. In certain embodiments of the process of the first embodiment, the guayule seeds which are treated have a 100 seed weight of 0.04 grams to 0.1 grams (e.g., 0.04, 0.05, 0.06, 0.07, 0.08, 0.09, or 0.1 grams), preferably 0.05 grams to 0.1 grams. The 100 seed weights referred to herein can be determined by determining the weight of 100 seeds, preferably after drying the seeds to a moisture content of no more than 10% by weight. In certain embodiments of the process of the first embodiment, the process includes a step of providing a quantity of guayule seeds having a 100 seed weight as described above and then treating the quantity of seeds (i.e., with a seed germination treatment and/or with an insecticide, as discussed above).

### Seed Starting Mixture

As mentioned above, the process of the first embodiment disclosed herein utilizes a planting mixture which comprises treated guayule seeds and a seed starting mixture. According to the first embodiment, the particular components of the seed starting mixture may vary. In the first embodiment, a majority by volume of the seed starting mixture comprises peat, plant fiber (e.g., coir, pine or other bark, rice hulls, or a combination thereof), or a combination thereof. In certain embodiments of the first embodiment, a majority by volume of the seed starting mixture comprises peat. In certain embodiments of the first embodiment, a majority by volume of the seed starting mixture comprises coir. In certain embodiments of the first embodiment, the majority by volume of the seed starting mixture which is peat, plant fiber, or a combination thereof is at least 55%, at least 60%, at least 65%, at least 70%, at least 75%, at least 80%, at least 85%, at least 90%, at least 95%, 55-95%, or 60-90% by volume. In certain embodiments of the first embodiment, a minority by volume of the seed starting mixture comprises one or more of: vermiculite, perlite, compost, sand, fertilizer, wetting agent, or an alkaline agent. In certain embodiments of the first embodiment, the seed starting mixture comprises a majority by volume of peat, plant fiber, or a combination thereof, in combination with a minority by volume of one or more of vermiculite, perlite, compost, fertilizer, or an alkaline agent. In certain embodiments of the first embodiment, the seed starting mixture comprises either no sand (i.e., is free of sand) or it contains a limited amount of sand. Limited amounts of sand may correspond to no more than 10% by volume, no more than 5% by volume, or even no more than 1% by volume (based upon the total volume of the seed starting mixture).

In certain embodiments of the first embodiment, the seed starting mixture comprises a wetting agent. One or more than one wetting agent may be utilized. Generally, a wetting agent can be understood as facilitating absorption of water into the seed starting mixture (or planting mixture). Various wetting agents are suitable for use in the seed starting mixture according to certain embodiments of the first embodiment, including, but not limited to: yucca, polyoxyethylene ester, ethoxysulfate, and combinations thereof.

In certain embodiments of the first embodiment, the seed starting mixture comprises a fertilizer. One or more than one fertilizer may be utilized. Various fertilizers are suitable for use in the seed starting mixture according to certain embodiments of the first embodiment, including, but not limited to, phosphorous-containing compounds, potassium-containing compounds, magnesium-containing compounds, nitrogen-containing compounds and combinations thereof. Exemplary phosphorous-containing fertilizers include, but are not limited to, bone meal, bone char, rock phosphate, and combinations thereof. Exemplary potassium-containing fertilizers include, but are not limited to, potassium-sulfate, green sand (also known as glauconite), and combinations thereof. Exemplary magnesium-containing fertilizers include, but are not limited to, Epsom salts, magnesium sulfate, and combinations thereof. Exemplary nitrogen-containing fertilizers include, but are not limited to, blood meal, crab meal, fish meal, plant meal, urea, ammonium sulfate, and combinations thereof.

In certain embodiments of the first embodiment, the seed starting mixture comprises an alkaline agent. One or more than one alkaline agent may be utilized. Various alkaline agents are suitable for use in the seed starting mixture according to certain embodiments of the first embodiment, including, but not limited to: limestone (e.g., aragonite, ag lime, hydrated lime, burnt lime, dolomitic lime, pelletized lime), gypsum, wood ash, and combinations thereof.

### Planting Mixture / Mixing

As mentioned above, the planting mixture of the first embodiment comprises treated guayule seeds and a seed starting mixture. According to the process of the first embodiment, treated guayule seeds are mixed with a seed starting mixture to produce a planting mixture. In certain embodiments of the first embodiment, the planting mixture consists of treated guayule seeds and seed starting mixture. In certain embodiments of the first embodiment, the planting mixture consists of treated guayule seeds and seed starting mixture and has an overall moisture content as discussed below (in such an embodiment the planting mixture can be understood as consisting of treated guayule seeds, seed starting mixture and moisture). According to the first embodiment, the relative amounts of treated guayule seeds and seed starting mixture in the planting mixture may vary. In certain embodiments of the first embodiment, the mixing of the treated guayule seeds with the seed starting mixture comprises mixing 0.1-5 kilograms (e.g. 0.1, 0.2, 0.25, 0.3, 0.35, 0.4, 0.45, 0.5, 0.55, 0.6, 0.65, 0.7, 0.75, 0.8, 0.85, 0.9, 0.95, 1, 1.1, 1.2, 1.3, 1.4, 1.5, 1.6, 1.7, 1.8, 1.9, 2, 2.5, 3, 3.5, 4, or 5 kilograms), preferably 0.1 to about 0.5 kilograms or 0.1-0.5 kilograms of treated guayule seeds per 380 liters (100 gallons) of seed starting mixture. According to the first embodiment, methods for mixing or combination of the treated guayule seeds with the seed starting mixing are not particularly limited. In certain embodiments of the first embodiment, the mixing of the treated guayule seeds with the seed starting mixture comprises mechanical mixing; in certain such embodiments the mechanical mixing utilizes a mixer with a rotating drum, a mixer with an agitator, or a vertical mixer. In certain embodiments of the first embodiment, the treated guayule seeds are dried (e.g., to a moisture content of no more than 20% by weight) prior to mixing with the seed starting mixture. In certain embodiments of the first embodiment, the seed starting mixture is dried (e.g., to a moisture content of no more than 15% by weight) prior to mixing with the treated guayule seeds. In certain embodiments of the first embodiment, the treated guayule seeds have a moisture content of no more than 20% by weight, no more than 15% by weight, no more than 10% by weight, or no more than 5% by weight. In certain embodiments of the first embodiment, both the treated guayule seeds and seed starting mixture meet the foregoing moisture content prior to mixing to produce the planting mixture. In certain embodiments of the first embodiment, moisture is added during mixing to produce a planting mixture which has a moisture content as discussed below; in certain such embodiments, the moisture is added via addition of water, liquid fertilizer, or a combination thereof.

According to the process of the first embodiment, the moisture content of the planting mixture may vary. Generally, any moisture present in the planting mixture will be limited to an amount which still allows the planting mixture to flow or pour (e.g., such as from a dispenser onto the field). In certain embodiments of the first embodiment, the moisture content of the planting mixture is about 10 to about 30 weight % or 10-30 weight % (e.g., 10 weight %, 15 weight %, 20 weight %, 25 weight %, 30 weight %), preferably about 15 to about 20 weight % or 15-20 weight %.

### Fields and Soil

As mentioned above, the process of the first embodiment comprises applying portions of the planting mixture to the soil of a field. According to the first embodiment, a field is provided which comprises soil with an exposed surface. The size of the field may vary, as discussed below. According to the first embodiment, the composition of the soil in the field may vary.

As mentioned above, the processes of the first embodiment comprise direct seeding of guayule seeds into a field and include providing a field comprising soil with an exposed surface. The field represents the location where the treated guayule seeds will germinate into seedlings and where those seedlings will grow into guayule shrubs (i.e., without any transplanting of the seedlings). The field also represents the location at which the guayule shrubs grown from the seedlings are ultimately harvested for their rubber-containing biomass. According to the first embodiment, the size of the field may vary, but will generally be greater than 1 acre in size. In certain embodiments of the first embodiment, the field is greater than 5 acres in size (e.g., 5-500, 5, 10, 20, 50, 100, 200, 300, 400 or 500 acres), greater than 10 acres in size, greater than 20 acres in size, or greater than 100 acres in size. The fields utilized in the process of the first embodiment contain soil that is exposed to the environment rather than being partially or entirely protected such as in a greenhouse.

As mentioned above, a field is direct seeded with guayule according to the process of the first embodiment. Depending upon the number of days that have passed from the time of applying the portions of planting mixture to the field, the field will contain guayule seedlings or guayule shrubs. Also disclosed herein are fields having the seedling and portion rates discussed *infra* with respect to the process of the first embodiment.

### Applying to the soil

As mentioned above, the process of the first embodiment comprises applying portions of the planting mixture to the soil. In certain embodiments of the first embodiment, the applying comprises mechanical application to the field, e.g., using one or more machines. In certain embodiments of the first embodiment, the mechanical application entails the use of a plug mix planter. A plug mix planter is designed to deposit plugs or portions of loose solids mixtures onto the soil of a field. Various plug mix planters are commercially available, including, but not limited to the model 900M Automatic (available with plug mix attachment) from Mechanical Transplanter Company, LLC (Holland, Michigan). In certain embodiments of the first embodiment, the applying comprises mechanical application using a tractor equipped with multiple plug mix planters (e.g., 2-12 plug mix planters) enabling application of the portions to multiple rows (e.g., 2-12 rows) at the same time. In certain embodiments of the first embodiment, the applying comprises mechanical application using a tractor equipped with a 2-12 row plug mix planter (e.g., 2, 3, 4, 5, 6, 7, 8, 9, 10, 11, or 12 rows), with a four-row plug mix planter, with an eight-row plug mix planter, with a ten-row plug mix planter or with a twelve-row plug mix planter.

According to the process of the first embodiment, the rate at which the portions are applied to the soil of the field may vary. In certain embodiments of the first embodiment, the applying comprises mechanical application of the portions to at least 2 acres/hour of the field, preferably about 3 to about 4 acres/hour of the field; in certain such embodiments, the foregoing application rates utilize a four-row planter. In certain embodiments of the first embodiment, the applying comprises mechanical application of the portions to at least 4 acres/hour of the field, preferably about 6 to about 12 acres/hour of the field; in certain such embodiments, the foregoing application rate utilizes an eight-row planter or a twelve-row planter.

### Pressing

As mentioned above, according to the process of the first embodiment, after applying portions of the planting mixture to the soil, the portions are pressed. Thus, the process of the first embodiment includes pressing the portions of the planting mixture. Without being bound by theory, it is believed that pressing of the planting mixture is advantageous to germination of the guayule seeds by reducing loss and disturbance of the planting mixture (including guayule seeds) by wind and/or water. However, care must be taken during the pressing of the portions to ensure that the pressure applied does not push the guayule seeds within the portions too far beneath the surface or too far into the underlying soil which may hamper germination. Generally, the pressing will entail pressing down or compressing of the portion into the soil by no more than about 2.5 cm (about 1 inch), by no more than 2.5 cm (1 inch) (e.g., 1 inch, 0.9 inches, 0.875 inches or 7/8 inches, 0.8 inches, 0.75 inches or ¾ inches, 0.7 inches, 0.625 inches or 5/8 inches, 0.6 inches, 0.5 inches or ½ inch, 0.4 inches, 0.375 inches or 3/8 inches, 0.3 inches, 0.25 inches or ¼ inches, 0.2 inches, 0.125 inches or 1/8 inches, or 0.1 inches), by about 0.3 to about 2.5 cm (about 1/8 to about 1 inch), by 0.3-2.5 cm (1/8 to 1 inch), by about 0.6 to about 1.9 cm (about ¼ to about ¾ inches), or by 0.6-1.9 cm (¼ to ¾ inches). According to a metric scale, generally, the pressing will entail pressing down or compressing of the portion into the soil by no more than about 2.5 centimeters, by no more than 2.5 centimeters (e.g., 2.5, 2.2, 2, 1.8, 1.5, 1.2, 1, 0.8, 0.5, 0.3, or 0.2 centimeters), by about 0.3 to about 2.5 centimeters or 0.3-2.5 centimeters, by about 0.6 to about 1 centimeters, or by 0.6-1 centimeters. According to the first embodiment, various types of pressing may be utilized. In certain embodiments of the first embodiment, the pressing comprises pressing by rolling (e.g., by use of a wheel), by stamping, or a combination thereof.

### Germination and seedlings

As mentioned above, according to the process of the first embodiment, the treated guayule seeds within the applied portions are allowed to germinate into seedlings. The seedlings will then grow (within the field) into guayule shrubs. Processes according to the first embodiment generally result in a relatively high germination rate. The germination rate can be measured in terms of the number of seedlings per portion (referred to herein as a seedling rate). In certain embodiments of the first embodiment, the seedling rate is at least 1 (e.g., 1, 2, 3, 4, 5, 6), preferably at least 2 or at least 4 seedlings/portion (referred to herein as a seedling rate). Processes according to the first embodiment may also result in a relatively high percentage of portions having treated guayule seeds germinating into seedlings (referred to herein as a portion rate). In certain embodiments of the first embodiment, the portion rate is at least 70% (e.g., 70%, 75%, 80%, 85%, 90%, 95%,98%, 99%, or even 100%), at least 80%, or at least 90% (e.g., 90%, 91%, 92%, 93%, 94%, 95%, 96%, 97%, 98%, 99%, 99.5% or even 100%). In certain embodiments of the first embodiment the portion rate is as high as at least 95% or at least 98%. The portion rate can be understood as the percentage of portions having two or more seedlings emerge. Both the seedling rate and the portion rate can be determined by counting of seedlings in a representative quantity of portions in the field (e.g., 100 portions) or by averaging at least 5 representative quantities of such portions from the field. The seedling rate and portion rate are preferably determined 8-10 days after the portions of planting mixture were applied to the soil; when attempting to measure both rates they should be determined upon the same day. A range of more than one day is provided since counting may need to be conducted during more than one day, and/or sections of a given field may have been planted over the course of a couple of days. To the extent that it is deemed necessary to conduct the counting on a single day, it should be conducted upon the 9^{th} day after planting. As used herein, a seedling will have at least two cotolyden leaves (spread apart or open) and a root portion (radicle) extending into the soil. Measurements of the number of seedlings per portion or the percentage of portions having seedlings taken more than 10 days after the portions of planting mixture were applied to the soil may yield lower measurement rates due to seedlings dying from any combination of factors (e.g., excessive water, too little water, fungus, pests).

### Irrigating

In certain embodiments of the first embodiment, the process further comprises irrigating to apply water to the treated seeds within the portions of the field. In those embodiments of the first embodiment wherein irrigation is utilized, the type of irrigation may vary. Exemplary forms of irrigation that may be suitable include, but are not limited to, center pivot (also known as central pivot), linear move, traveling gun, solid set (portable), permanent set, micro-irrigation (e.g., drip or micro-sprinkler), drip irrigation (e.g., surface drip, subsurface drip), furrow, basin, or border. In certain embodiments of the first embodiment, the irrigation comprises overhead irrigation; in certain such embodiments, the overhead irrigation comprises central pivot irrigation or solid-set irrigation. In certain embodiments of the first embodiment, the irrigation comprises surface irrigation; in certain such embodiments, the surface irrigation comprises furrow irrigation, basin irrigation, or border irrigation. Surface irrigation generally refers to irrigation whereby the water is distributed by gravity over the surface of a field. In certain embodiments of the first embodiment, irrigation is applied within 2 day(s) of applying the portions to the field; in certain such embodiments, irrigation is applied for an additional 5-8 days in an amount sufficient to maintain the surface of the soil and pressed portions moist (although preferably the creation of standing water is avoided). As non-limiting examples, irrigation may be applied on each of days 1-8 after applying the portions to the field or on each of days 2-7 after applying the portions to the field.

### EXAMPLES

The following examples illustrate specific and exemplary embodiments and/or features of the embodiments of the present disclosure. The examples are provided solely for the purposes of illustration and should not be construed as limitations of the present disclosure. Numerous variations over these specific examples are possible without departing from the spirit and scope of the presently disclosed embodiments. It should specifically be understood that different ratios of treated guayule seeds to seed starting mixture, other seed starting mixtures, other seed germination treatments, as well as different methods of applying and different methods of pressing other than those utilized in the Examples can be utilized (*i.e*., as fully disclosed in the preceding paragraphs).

**Direct Seeding Trial A:** In September to October 2014, eight samples of planting mixture were prepared using varying amounts of treated guayule seed (as provided in Table 1 below) in combination with a seed starting mixture. The seed starting mixture was a commercially available seed starting mix, either Jiffy brand Natural & Organic Seed Starting Mix or Sun Gro^{®} brand. The guayule seeds were obtained from Bridgestone Agro Operations Research Farm (and had been harvested from a field of their guayule shrubs). The treated guayule seed had been prepared by soaking in 0.6 millimolar gibberellic acid solution for 2 hours at room temperature, followed by drying for approximately 15 hours at room temperature. In preparing the gibberellic acid solution, solid GA3 powder was directly added to water to the indicated molarity. Dried, treated guayule seed was mixed with seed starting mixture using an electric, portable concrete mixer, with a mixing time of about 2 minutes.

| **Table 1** | |
|---|---|
| | Concentration of treated seed in seed starting mixture (kg/380 liters (100 gallons)) |
| Sample 1 | 0.25 |
| Sample 2 | 0.5 |
| Sample 3 | 1 |
| Sample 4 | 2 |
| Sample 5 | 4 |
| Sample 6 | 6 |
| Sample 7 | 8 |
| Sample 8 | 12 |

Within two days after preparation of the planting mixtures, each planting mixture was applied to a separate section of a prepared field (located in Eloy, Arizona) using model 900M Automatic plug mix attachments from Mechanical Transplater Company, LLC (Holland, Michigan). A farm tractor was equipped with a pull-behind apparatus having four of the plug mix attachments configured to apply portions of the planting mixture to rows of the soil surface which had been prepared into beds spaced 102 cm (40 inches) apart and at an in-row spacing of 30 cm (12 inches) apart. Each portion was approximately 30 milliliters in volume of planting mixture and was applied to a depression of about 0.6 cm (about 0.25 inches) in depth which had formed by the plug mix attachment. The planting mixture was applied at an application rate of about 380 liters (100 gallons) of seed planting mixture per acre of field, resulting in seeding rates which varied from 0.25 kilograms treated guayule seed/acre to 12 kilograms treated guayule seed/acre. Each planting mixture was applied on the same day. Each plug mix attachment on the tractor was also configured with a wheel to allow for pressing of the portion into the soil. The pressing occurred with sufficient pressure to leave behind an indentation of approximately 0.6 cm (0.25 inches) upon the top of the beds.

After application of the portions, each field was overhead irrigated using a central pivot. Water was applied via the irrigation system for 3-5 hours per day during the first seven days in order to keep the soil surface moist, but without creating standing water on the top of the beds.

Beginning 8 days after application of the first portions to the soil, the number of seedlings in each of 100 spots for each planting rate was counted and the percentage of these spots with at least one seedling was counted. Counting was completed upon the 10^{th} day after application of the first portions to the soil had begun. Results of the counting appear below in Table 2, with Planting Rate 1 corresponding to measurements from the application of portions of Sample 1, Planting Rate 2 corresponding to measurements from the application of portions of Sample 2, etc. Seedlings were counted if they had at least two cotyledon leaves (spread apart or open) and a root portion (radicle) extending into the soil.

| **Table 2** | | |
|---|---|---|
| | **Seedlings per spot** | **Spots with seedling (%)** |
| Planting Rate 1 | 4.3 | 97 |
| Planting Rate 2 | 12.0 | 100 |
| Planting Rate 3 | 14.3 | 100 |
| Planting Rate 4 | 48.2 | 100 |
| Planting Rate 5 | 101.1 | 100 |
| Planting Rate 6 | 84.1 | 100 |
| Planting Rate 7 | 78 | 100 |
| Planting Rate 8 | 92.8 | 100 |

The guayule seedlings in the 8 sections of field were allowed to grow. Beginning at 13.5 months after application of the portions, monthly samples of shrubs from a 10-foot section of bed (harvested by cutting the shrub off at the soil surface) were taken from the highest and lowest planting rates (0.25 kg/acre and 12 kg/acre, respectively). At the same time that the monthly samples were taken from the highest and lowest planting rates, samples were also taken from a field containing guayule shrubs grown from transplanted seedlings that had been transplanted at the same time as direct seeding occurred. Both the transplanted and direct-seeded guayule was managed in the same way once in the field. The guayule shrubs grown from transplanted seedlings can be understood to represent a comparative or control example. Based upon the mass of the respective samples, a biomass per acre was calculated. Results appear below in Table 3 (wherein data is provided in pounds/acre).

| **Table 3** | | | |
|---|---|---|---|
| | **0.25 kg/acre rate** | **12 kg/acre rate** | **Transplants** |
| 13.5 months | 12100 | 11530 | 10340 |
| 14 months | 11450 | 11870 | 9500 |
| 15 months | 10800 | 9810 | 11210 |
| 16 months | 9770 | 8240 | 9340 |
| 17 months | 8150 | 8350 | 7780 |

As can be seen from the data of Table 3, in each month listed above the biomass/acre collected from the 0.25 kg/acre rate section of field varied by no more than 3.5 % from the biomass/acre collected from the 12 kg/acre rate section of field. Taking into account the inherent variation within each section of field as well as the precision of the measurement, the two planting rates can be considered to yield equivalent amounts of biomass. Moreover, by average the 0.25 kg/acre and 12 kg/acre planting rates yielded 8.6% and 3.9% more biomass, respectively, compared to the transplanted guayule.

This application discloses several numerical range limitations that support any range within the disclosed numerical ranges, even though a precise range limitation is not stated verbatim in the specification, because the embodiments of the compositions and methods disclosed herein could be practiced throughout the disclosed numerical ranges. With respect to the use of substantially any plural or singular terms herein, those having skill in the art can translate from the plural to the singular or from the singular to the plural as is appropriate to the context or application. The various singular or plural permutations may be expressly set forth herein for sake of clarity.

It will be understood by those within the art that, in general, terms used herein, and especially in the appended claims are generally intended as "open" terms. For example, the term "including" should be interpreted as "including but not limited to," the term "having" should be interpreted as "having at least," the term "includes" should be interpreted as "includes but is not limited to." It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (*e.g.,* "a" or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (*e.g*., "a system having at least one of A, B, and C" would include but not be limited to systems that have A alone, B alone, C alone, A and B together, A and C together, B and C together, and/or A, B, and C together, etc.). It will be further understood by those within the art that virtually any disjunctive word or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

While various aspects and embodiments of the compositions and methods have been disclosed herein, other aspects and embodiments will be apparent to those skilled in the art.

## Claims

1. A process for direct seeding of guayule seeds into a field comprising
a. providing treated guayule seeds and a field comprising soil with an exposed surface,
b. mixing the treated guayule seeds with a seed starting mixture to produce a planting mixture comprising 0.1 to 5 kg of the treated guayule seeds per 380 liters (100 gallons) of seed starting mixture, wherein the starting seed mixture comprises a majority by volume of peat, plant fibers, or a combination thereof,
c. applying portions of the planting mixture to the exposed surface of the soil,
d. pressing the portions of the planting mixture, and
e. allowing the guayule seeds of (d) to germinate into seedlings,
**characterised in that** the treated guayule seeds applied via portions of the planting mixture to the field are non-sprouted.

2. The process of claim 1, wherein the mixing of (b) comprises 0.1 to 4 kilograms, preferably 0.1 to 0.5 kilograms, of the treated guayule seeds per 380 liters (100 gallons) of seed starting mixture, and the applying of (c) is at a rate of 380 liters (100 gallons) of planting mixture per 4047m² (acre) of field.

3. The process of claim 1 or claim 2, wherein the applying of (c) is at a rate of 110 to 750 liters (30 to 200 gallons), preferably 280 to 380 liters (75 to 100 gallons) of planting mixture per 4047m² (acre).

4. The process of any one of claims 1-3, wherein the seed starting mixture comprises a minority by volume of one or more of vermiculite, perlite, compost, fertilizer, or an alkaline agent.

5. The process of any one of claims 1-4, further comprising irrigating the pressed portions.

6. The process of any one of claims 1-5, wherein the treated guayule seeds have been subjected to gibberellic acid treatment.

7. The process of any one of claims 1-6, wherein the treated guayule seeds have been treated with an insecticide selected from at least one of clothianidin, acetamiprid, nitenpyram, nithiazine, and thiacloprid.

8. The process of any one of claims 1-7, wherein the portions of (c) are applied in spaced intervals to rows of soil wherein each row is spaced 50 to 200 cm (20 to 80 inches) apart, preferably 75 to 120 cm (30 to 50 inches) apart and portions within rows are spaced 1 to 9 cm (0.5 to 36 inches) apart, preferably 25 to 45 cm (10 to 20 inches) apart.

9. The process of claim 8, wherein each portion of (c) contains 5 to 500, preferably 5 to 50 treated guayule seeds.

10. The process of claim 8 or claim 9, wherein each portion of (c) comprises 10 to 50 milliliters of planting mix.

11. The process of any one of claims 1-10, wherein the portions of (c) are applied in a continuous strip to rows of soil wherein each row is spaced 50 to 200 cm (20 to 80 inches) apart, preferably 75 to 120 cm (30 to 50 inches) apart.

12. The process of any one of claims 1-11, wherein the rows of soil further comprise one or more depressions upon which the portions of (c) are applied.

13. The process of any one of claims 1-12, wherein (c) comprises mechanical application to at least 8094 m²/hour (2 acres/hour) of the field, preferably 12,141 m²/hour to 16,188 m²/hour (3 to 4 acres/hour) of the field.

## Patentansprüche

1. Verfahren zur direkten Aussaat von Guayule-Samen in ein Feld, umfassend
a. Bereitstellen behandelter Guayule-Samen und eines Feldes, umfassend Boden mit einer freiliegenden Oberfläche,
b. Mischen der behandelten Guayule-Samen mit einer Samen-Startmischung, um eine Pflanzmischung herzustellen, die 0,1 bis 5 kg der behandelten Guayule-Samen pro 380 Liter (100 Gallonen) Samen-Startmischung umfasst, wobei die Start-Samenmischung einen Volumenhauptanteil an Torf, Pflanzenfasern oder einer Kombination davon umfasst,
c. Ausbringen von Portionen der Pflanzmischung auf die freiliegende Oberfläche des Bodens,
d. Einpressen der Portionen der Pflanzmischung, und
e. Keimenlassen der Guayule-Samen von (d) zu Sämlingen,
**dadurch gekennzeichnet, dass** die über Portionen der Pflanzmischung auf das Feld ausgebrachten behandelten Guayule-Samen ungekeimt sind.

2. Verfahren nach Anspruch 1, wobei das Mischen von (b) 0,1 bis 4 Kilogramm, vorzugsweise 0,1 bis 0,5 Kilogramm, der behandelten Guayule-Samen pro 380 Liter (100 Gallonen) der Samen-Startmischung umfasst, und das Ausbringen von (c) mit einer Rate von 380 Litern (100 Gallonen) Pflanzmischung pro 4047m² (Acre) Feld erfolgt.

3. Verfahren nach Anspruch 1 oder 2, wobei das Ausbringen von (c) mit einer Rate von 110 bis 750 Litern (30 bis 200 Gallonen), vorzugsweise 280 bis 380 Litern (75 bis 100 Gallonen) Pflanzmischung pro 4047m² (Acre) erfolgt.

4. Verfahren nach einem der Ansprüche 1 bis 3, wobei die Samen-Startmischung einen Volumenminderheitsanteil von einem oder mehreren von Vermiculit, Perlit, Kompost, Düngemittel oder einem alkalischen Mittel umfasst.

5. Verfahren nach einem der Ansprüche 1 bis 4, ferner umfassend Bewässern der eingepressten Portionen.

6. Verfahren nach einem der Ansprüche 1 bis 5, wobei die behandelten Guayule-Samen einer Behandlung mit Gibberellinsäure unterzogen wurden.

7. Verfahren nach einem der Ansprüche 1 bis 6, wobei die behandelten Guayule-Samen mit einem Insektizid behandelt wurden, ausgewählt aus mindestens einem von Clothianidin, Acetamiprid, Nitenpyram, Nithiazin und Thiacloprid.

8. Verfahren nach einem der Ansprüche 1 bis 7, wobei die Portionen von (c) in beabstandeten Intervallen auf Bodenreihen ausgebracht werden, wobei jede Reihe 50 bis 200 cm (20 bis 80 Zoll) voneinander beabstandet ist, vorzugsweise 75 bis 120 cm (30 bis 50 Zoll) voneinander beabstandet ist, und Portionen innerhalb der Reihen 1 bis 9 cm (0,5 bis 36 Zoll) voneinander beabstandet sind, vorzugsweise 25 bis 45 cm (10 bis 20 Zoll) voneinander beabstandet sind.

9. Verfahren nach Anspruch 8, wobei jede Portion von (c) 5 bis 500, vorzugsweise 5 bis 50, behandelte Guayule-Samen enthält.

10. Verfahren nach Anspruch 8 oder 9, wobei jede Portion von (c) 10 bis 50 Milliliter Pflanzmischung umfasst.

11. Verfahren nach einem der Ansprüche 1 bis 10, wobei die Portionen von (c) in einem kontinuierlichen Streifen auf Bodenreihen ausgebracht werden, wobei jede Reihe 50 bis 200 cm (20 bis 80 Zoll) voneinander beabstandet ist, vorzugsweise 75 bis 120 cm (30 bis 50 Zoll).

12. Verfahren nach einem der Ansprüche 1 bis 11, wobei die Bodenreihen ferner eine oder mehrere Vertiefungen umfassen, auf welche die Portionen von (c) ausgebracht werden.

13. Verfahren nach einem der Ansprüche 1 bis 12, wobei (c) das mechanische Ausbringen auf mindestens 8094 m²/Stunde (2 Acres/Stunde) des Feldes, vorzugsweise 12.141 m²/Stunde bis 16.188 m²/Stunde (3 bis 4 Acres/Stunde) des Feldes, umfasst.

## Revendications

1. Processus d'ensemencement direct de graines de guayule dans un champ comprenant
a. la fourniture de graines de guayule traitées et d'un champ comprenant un sol avec une surface exposée,
b. le mélange des graines de guayule traitées avec un mélange de démarrage de semis pour produire un mélange de plantation comprenant 0,1 à 5 kg des graines de guayule traitées pour 380 litres (100 gallons) de mélange de démarrage de semis, dans lequel le mélange de démarrage de semis comprend une majorité en volume de tourbe, de fibres végétales ou d'une combinaison de celles-ci,
c. l'application de parties du mélange de plantation à la surface exposée du sol,
d. le pressage des parties du mélange de plantation, et
e. le fait de permettre aux graines de guayule de (d) de germer en plantules, **caractérisé en ce que** les graines de guayule traitées appliquées au champ par le biais de parties du mélange de plantation sont non germées.

2. Procédé selon la revendication 1, dans lequel le mélange de (b) comprend 0,1 à 4 kilogrammes, de préférence 0,1 à 0,5 kilogramme, des graines de guayule traitées pour 380 litres (100 gallons) de mélange de démarrage de semis, et l'application de (c) s'effectue à raison de 380 litres (100 gallons) de mélange de plantation pour 4 047 m² (acre) de champ.

3. Processus selon la revendication 1 ou la revendication 2, dans lequel l'application de (c) s'effectue à un taux de 110 à 750 litres (30 à 200 gallons), de préférence 280 à 380 litres (75 à 100 gallons) de mélange de plantation pour 4 047 m² (acre).

4. Processus selon l'une quelconque des revendications 1 à 3, dans lequel le mélange de démarrage de semis comprend une minorité en volume d'un ou plusieurs éléments parmi vermiculite, perlite, compost, engrais ou agent alcalin.

5. Processus selon l'une quelconque des revendications 1 à 4, comprenant en outre l'irrigation des parties pressées.

6. Processus selon l'une quelconque des revendications 1 à 5, dans lequel les graines de guayule traitées ont été soumises à un traitement à l'acide gibbérellique.

7. Processus selon l'une quelconque des revendications 1 à 6, dans lequel les graines de guayule traitées ont été traitées avec un insecticide choisi parmi au moins l'un parmi clothianidine, acétamipride, nitenpyrame, nithiazine et thiaclopride.

8. Processus selon l'une quelconque des revendications 1 à 7, dans lequel les parties de (c) sont appliquées à des intervalles espacés sur des rangées de sol, dans lequel chaque rangée est espacée de 50 à 200 cm (20 à 80 pouces), de préférence de 75 à 120 cm (30 à 50 pouces), et des parties au sein de rangées sont espacées de 1 à 9 cm (0,5 à 36 pouces), de préférence de 25 à 45 cm (10 à 20 pouces).

9. Processus selon la revendication 8, dans lequel chaque partie de (c) contient de 5 à 500, de préférence de 5 à 50 graines de guayule traitées.

10. Processus selon la revendication 8 ou la revendication 9, dans lequel chaque partie de (c) comprend 10 à 50 millilitres de mélange de plantation.

11. Processus selon l'une quelconque des revendications 1 à 10, dans lequel les parties de (c) sont appliquées en une bande continue à des rangées de sol, dans lequel chaque rangée est espacée de 50 à 200 cm (20 à 80 pouces), de préférence de 75 à 120 cm (30 à 50 pouces).

12. Processus selon l'une quelconque des revendications 1 à 11, dans lequel les rangées de sol comprennent en outre une ou plusieurs dépressions sur lesquelles les parties de (c) sont appliquées.

13. Processus selon l'une quelconque des revendications 1 à 12, dans lequel (c) comprend l'application mécanique sur au moins 8 094 m²/heure (2 acres/heure) du champ, de préférence de 12 141 m²/heure à 16 188 m²/heure (3 à 4 acres/heure) du champ.
